# EUROPÄISCHE PATENTSCHRIFT

(11) **EP 1 372 248 B1**
(45) Veröffentlichungstag und Bekanntmachung des Hinweises auf die Patenterteilung: **22.10.2008**
(21) Anmeldenummer: 03012467.1
(22) Anmeldetag: 31.05.2003
(51) Int. Cl.: H02K 15/02, H02K 5/128

(54) **Verfahren zur Montage eines Spalttopfmotors**
Assembling method of air-gap sleeve motor
Méthode d'assemblage de moteur avec chemise d'entrefer

(30) Priorität: 13.06.2002 DE 10226145
(43) Veröffentlichungstag der Anmeldung: 17.12.2003
(73) Patentinhaber: WILO AG, 44263 Dortmund (DE)
(72) Erfinder: Fourner, Alain, 53000 Laval (FR); Diouron, David, 53970 Nuille sur Vicoin (FR); Ciron, Maurice, 53260 Entrammes (FR)
(74) Vertreter: COHAUSZ DAWIDOWICZ HANNIG & SOZIEN

(56) Entgegenhaltungen:
- EP-A- 0 530 786
- EP-A- 0 732 794
- EP-A- 1 211 422
- EP-A- 1 211 783
- DE-A- 19 525 704
- DE-A1- 2 751 516
- DE-A1- 3 931 988
- DE-A1- 4 441 378
- FR-A- 1 531 555
- US-A- 5 117 138

## Beschreibung

Die Erfindung betrifft ein Verfahren zur Montage eines Spalttopfmotors, wobei ein Spalttopf in das Motorgehäuse eingebracht wird, und ein auf einer Motorwelle befestigter Rotor in den Spalttopf eingebracht und darin drehbar gelagert wird, und wobei der Spalttopf durch einen Verschluß verschlossen wird, welcher eine Öffnung aufweist, durch die die Motorwelle hindurchgeführt wird. Die Erfindung betrifft ferner eine derart vormontierte Baueinheit für einen Spalttopfmotor.

Derartige Spalttopfmotoren oder Spaltrohrmotoren sind allgemein bekannt. Sie werden üblicherweise zum Antrieb von Spalttopfpumpen bzw. Spaltrohrpumpen verwendet, die in Naßläuferbauweise vor allem an Heizungs- und Brauchwasseranlagen eingesetzt werden.

Bei der Montage dieser bekannten Spalttopfmotoren wird zunächst der Spalttopf insbesondere zusammen mit den darauf angeordneten Statorwicklungen in das Motorgehäuse eingebracht, bevor anschließend die Motorwelle mit dem drehfest darauf befestigten Rotor in den Spalttopf eingebracht und in einem Lager am Boden des Spalttopfes gelagert wird. Erst in einem nachfolgenden Montageschritt wird ein Lagerträger in den Öffnungsbereich des Spalttopfes eingebracht, in dessen Lager das freie Ende der Motorwelle gelagert wird. Durch diesen Lagerträger, der oftmals durch ein Messingdrehteil gebildet ist, wird der Spalttopf gleichzeitig auch geschlossen.

Das stellt einen erheblichen Arbeitsaufwand dar und bedeutet ein relativ langdauerndes und mit relativ hohen Kosten verbundenes Montageverfahren.

Die deutsche Offenlegungsschrift DE 39 31 988 A1 zeigt einen derartigen Aufbau eines Spaltrohrmotors, bei dem das Spaltrohr durch einen Lagerträger verschlossen ist, wobei jedoch zu Reparaturzwecken die Baueinheit Rotor, Rotorlager, Lagerträger und Spaltrohr aus dem Stator als Kartusche herausnehmbar ist. Nachteilig ist hierbei, dass eine Qualitätskontrolle bezüglich der Drehbarkeit der Rotorwelle bei der Montage der Baueinheit außerhalb des Stators aufgrund des Verschlusses des Spaltrohres mit dem Lagerträger nicht möglich ist, da der Lagerträger nicht ohne Beschädigung anderer Bauteile wieder entfernt werden kann.

Aufgabe der vorliegenden Erfindung ist es daher, ein einfach und schnell ausführbares Montageverfahren der eingangs genannten Art zu schaffen, das bei einem geringeren Arbeitsaufwand nur geringe Kosten verursacht und eine frühzeitige Qualitätskontrolle bezüglich der freien Drehbarkeit der Welle ermöglicht.

Diese Aufgabe wird erfindungsgemäß durch ein Verfahren nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, daß zunächst der auf der Motorwelle befestigte Rotor in den Spalttopf eingebracht und darin drehbar gelagert wird, und daß danach der Spalttopf durch den Verschluß verschlossen wird, und daß erst danach der Spalttopf mit dem darin eingeschlossenen Rotor in das Motorgehäuse eingebracht wird.

Der Hauptvorteil liegt dabei darin, daß eine leicht herzustellende vormontierte Baueinheit mit einem in dem Spalttopf eingeschlossenen und bereits darin gelagerten Rotor geschaffen wird, die leicht und in kurzer Zeit weiter in das Motorgehäuse des Spalttopfmotors eingebaut werden kann.

Hierdurch kann die Montage insgesamt verkürzt werden, so daß nur geringere Montagekosten anfallen. Auch kann frühzeitig überprüft werden, ob der Rotor leichtgängig und korrekt ausgewuchteten umläuft. Außerdem ist kein separater Lagerträger, insbesondere kein teures Messingdrehteil mehr erforderlich. Besonders vorteilhaft ist es, wenn der Verschluß mit einem ringförmigen Bereich der Außenwandung formschlüssig in einen Bereich der Innenwandung an der Öffnung des Spalttopfs eingesetzt wird. Hierdurch ist eine exakte Positionierung des Verschlusses mit seiner die Motorwelle aufnehmenden und/oder lagernden Öffnung einerseits und dem Spalttopf andererseits gewährleistet.

Eine besonders schnelle, einfache und kostengünstige Befestigung des Verschlusses kann dadurch erreicht werden, daß der Verschluß kraftschlüssig an dem Spalttopf befestigt wird. Vorzugsweise kann der Verschluß in den Öffnungsbereich des Spalttopfs eingepreßt werden.

Alternativ oder zusätzlich kann der Verschluß auch stoffschlüssig an dem Spalttopf befestigt werden. Hierdurch kann eine besonders stabile und nicht lösbare Verbindung geschaffen werden.

Vorzugsweise wird hierzu vorgeschlagen, daß der Verschluß entlang seines Umfangs entweder linienförmig oder an mehreren Stellen punktförmig mit dem Spalttopf verschweißt wird. Durch Laser-Schweißen können hierbei besonders kleine Schweißnähte erreicht werden, was insbesondere bei kleineren Motoren mit dünnwandigen Spalttöpfen von großem Vorteil ist.

Besonders vorteilhaft ist es ferner, wenn in der Öffnung des Verschlusses vor dem Verschließen des Spalttopfes ein Lager angeordnet wird, in welchem das freie Ende der Motorwelle gelagert wird. Auf diese Weise wird der Rotor gleichzeitig mit dem Verschließen des Spalttopfes gelagert.

Gemäß einer besonders bevorzugten Ausführungsform der Erfindung wird der Verschluß durch einen Lagerschild gebildet, der mit einem Kragen radial nach außen über den Spalttopf übersteht, wobei die offene Stirnseite des Motorgehäuses beim Einbringen des Spalttopfes durch den Kragen verschlossen wird. Hierdurch können die Gesamt-Montagedauer weiter verkürzt und die Kosten zusätzlich gesenkt werden.
Bei einer Ausführungsvariante der Erfindung kann auch hat der Spalttopf einen radial nach außen vorstehenden Kragen haben, durch den das Motorgehäuse beim Einbringen des Spalttopfes stirnseitig verschlossen wird. Auch auf diese Weise können die Montagedauer und die Kosten reduziert werden.

Gemäß einer weiteren besonders bevorzugten Ausführungsform der Erfindung wird der Spalttopf durch ein Spaltrohr gebildet, welches an seinem dem freien Ende der Motorwelle abgewandten Ende durch ein separates Bodenelement verschlossen wird. Der Spalttopf wird dabei aus zwei miteinander verbundenen Einzelelementen gebildet, wodurch eine leichte Anpassung an verschiedene Baugrößen und/oder Bauformen möglich ist.

Ähnlich wie bei dem Verschluß ist es auch hier von Vorteil, wenn das Bodenelement mit einem ringförmigen Bereich formschlüssig in den Spalttopf eingesetzt und darin kraftschlüssig und/oder stoffschlüssig befestigt wird.

Vorzugsweise kann das Bodenelement linienförmig oder punktförmig mit dem Spalttopf verschweißt werden, wobei wiederum die Laser-Schweißtechnik besondere Vorteile bietet. einen vorgegebenen Anschlußdurchmesser aufweise, an den jeweils Spaltrohre unterschiedlicher Form bzw. Größe befestigbar sind, deren Enden jeweils an die entsprechenden vorgegebenen Anschlußdurchmesser des Verschlusses und des Bodenelementes angepaßt sind.

Besonders vorteilhaft und kostengünstig ist es ferner, wenn der Verschluß und/oder das Bodenelement durch ein Blechteil gebildet ist, welches zu seiner Formgebung vorzugsweise tiefgezogen ist.

Weitere Vorteile und Merkmale der Erfindung ergeben sich aus der nachfolgenden Beschreibung und den in den Zeichnungen dargestellten Ausführungsbeispielen.
Es zeigen:
- Figur 1:: Schematische Darstellung einer ersten Ausführungsart der Baueinheit gemäß dem vorangehend beschriebenen Verfahren;
- Figur 2:: Schematische Darstellung einer zweiten Ausführungsart der Baueinheit gemäß dem vorangehend beschriebenen Verfahren;
- Figur 3:: Baueinheit gemäß Figur 2 mit weiteren Anbauteilen;
- Figur 4:: Baueinheit aus Figur 3, eingebaut in einen Motor einer Spalttopfpumpe.

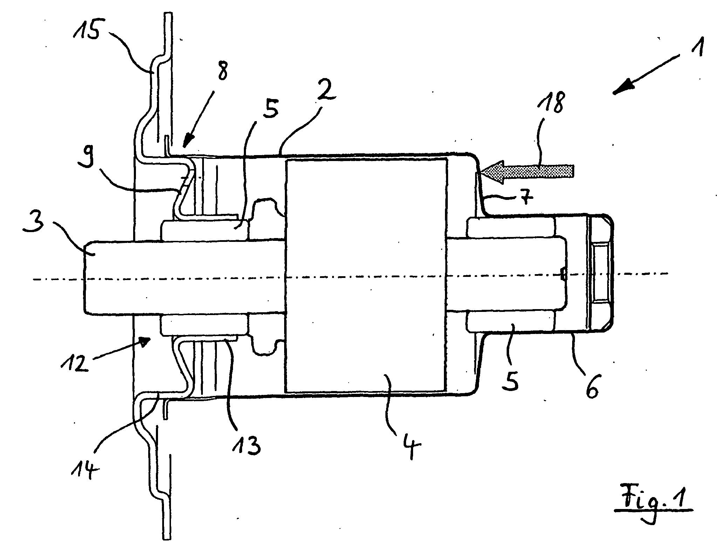

Die in Figur 1 dargestellte Baueinheit 1 umfaßt einen Spalttopf 2, in dem eine Motorwelle 3 mit einem drehfest darauf befestigten Rotor 4 in zwei als Radial-Gleitlager ausgeführten Lagern 5 gelagert ist. Das hintere Lager 5 ist dabei in einem Bereich 6 mit geringerem Durchmesser aufgenommen, der im Boden 7 des Spalttopfs 2 koaxial herausgezogen ist.

Eine besonders einfache und frühzeitige Qualitätskontrolle kann dadurch erreicht werden, daß nach der kraftschlüssigen Befestigung des Verschlusses am Spalttopf zunächst geprüft wird, ob die Motorwelle frei drehbar ist. Falls die Motorwelle nicht frei drehbar sein sollte, so kann der Verschluß relativ einfach wieder von dem Spalttopf entfernt und um einen geeigneten Winkel versetzt in einer anderen Position erneut aufgebracht werden, woran sich eine erneute Überprüfung anschließt. Wenn die Motorwelle frei drehbar ist kann der Verschluß gegebenenfalls zusätzlich stoffschlüssig am Spalttopf befestigt werden.

Ein Beispiel einer gemäß dem vorangehend beschriebenen Verfahren vormontierten Baueinheit für einen Spalttopfmotor wird gegeben. Eine derartige Baueinheit für einen Spalttopfmotor umfaßt einen Spalttopf mit einem drehbar darin gelagerten und auf einer Motorwelle befestigten Rotor, wobei der Spalttopf außerhalb des Spalttopfmotors durch einen Verschluß verschlossen ist, der eine Öffnung aufweist, durch die die Motorwelle hindurchgeführt ist.

Besonders vorteilhaft ist es dabei, wenn der Verschluß durch einen Lagerschild gebildet ist, der einen zumindest im wesentlichen radial nach außen über den Spalttopf überstehenden Kragen aufweist, durch den das Gehäuse des Spalttopfmotors stirnseitig verschließbar ist.

Vorzugsweise ist der Spalttopf durch ein Spaltrohr gebildet, welches an seinem dem freien Ende der Motorwelle abgewandten Ende durch ein separates Bodenelement verschlossen ist.

Eine besonders große Flexibilität bezüglich unterschiedlicher Formen und/oder Größen, insbesondere bezüglich unterschiedlicher Durchmesser und/oder unterschiedlicher Längen des Rotors kann mit relativ geringerem Aufwand dadurch erreicht werden, daß der Verschluß und das Bodenelement, die vorteilhafterweise jeweils als einheitliche Standardteile ausgebildet sind, jeweils An der dem Boden 7 abgewandten offenen Seite 8 wird der Spalttopf 2 erfindungsgemäß durch einen Verschluß 9 verschlossen, so daß der Rotor 4 quasi in dem Spalttopf 2 gefangen ist, bevor der Spalttopf 2 als vormontierte Baueinheit 1 in das Gehäuse 10 des Spalttopfmotors 11 eingebracht wird. Die Motorwelle 3 ragt dabei durch eine zentrale Öffnung 12 im Verschluß 9 aus der Baueinheit 1 heraus.

Der Verschluß 9 ist als tiefgezogenes Blechteil ausgeführt. Er bildet einen Lagerschild, der in einer zentralen Führungsbuchse 13 das vordere Lager 5 aufnimmt. Mit einem zylindrischen Fügebereich 14 ist der Verschluß 9 form- und kraftschlüssig in die Innenwandung des Spalttopfs 2 hineingepreßt. Obwohl hierdurch schon eine ausreichende Festigkeit gegeben ist kann zusätzlich noch eine Schweißverbindung vorgenommen werden.
Ein Kragen 15 steht scheibenförmig im wesentlichen radial nach außen über den Spalttopf 2 über, durch den die offene Stirnseite des Motorgehäuses 10 beim Einbringen des Spalttopfes 2 verschlossen wird. Gleichzeitig begrenzt der Kragen 15 mit seiner dem Motor 11 abgewandten Seite den Laufradraum 16 der von dem Elektromotor 11 angetriebenen Spalttopfpumpe 17.

Je nach Anwendung der Pumpe 17 können im Motorgehäuse 10 geeignete Abstützmittel 18 vorgesehen sein, die axial auf den Boden 7 des Spalttopfs 2 drücken, um den Einsatz auch bei höheren Drücken zu ermöglichen.

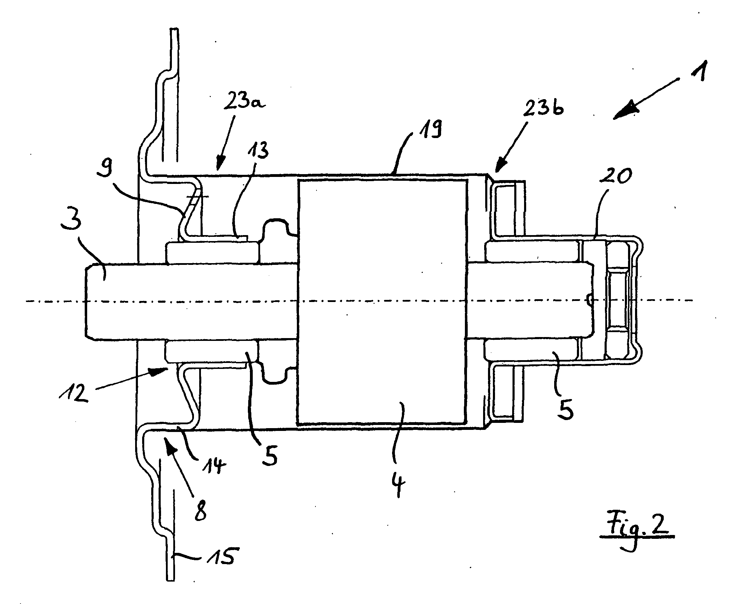

Während bei der Alternative gemäß Figur 1 der Spalttopf 2 einstückig ausgebildet ist, ist er bei der Alternative gemäß Figur 2 zweistückig ausgeführt. Ein Spaltrohr 19 ist an seinem Boden durch ein separates Bodenelement 20 verschlossen, welches formschlüssig und kraftschlüssig an dem Spaltrohr 19 befestigt und zusätzlich noch daran verschweißt ist. Das Bodenelement 20 kann dabei relativ stabil ausgeführt werden, so daß auch bei höheren Förderdrücken keine Abstützmittel erforderlich sind. Auch nimmt das Bodenelement 20 das hintere Lager 5 auf.

Auch bei der Alternative gemäß Figur 2 wird der aus Spaltrohr 19 und Bodenelement 20 gebildete Spalttopf durch den Verschluß 9 verschlossen, bevor der Spalttopf als vormontierte Baueinheit 1 in das Gehäuse 10 des Spalttopfmotors 11 eingebracht wird.

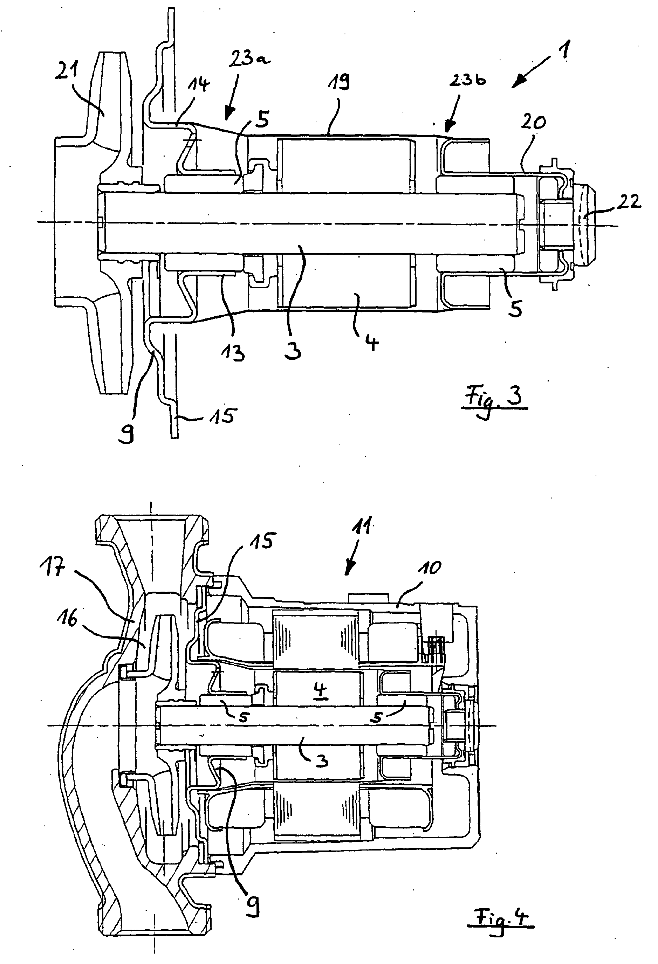

Vor dem Einbringen der Baueinheit 1 in das Motorgehäuse 10 können noch weitere Bauelemente angebracht werden, beispielsweise ein Pumpenlaufrad 21 oder eine Löseschraube 22, nach deren Entfernung die Motorwelle 3 stirnseitig zugänglich ist und nötigenfalls von außen manipuliert werden kann (Figur 3).

Bei einem Vergleich der Figuren 2 und 3 ist festzustellen, daß das Spaltrohr 19 in einem vorderen und hinteren Bereich 23a, 23b unterschiedlich stark konusförmig abgestuft sein kann, um unterschiedliche Durchmesser des Spaltrohres 19 für verschiedenen Durchmesser unterschiedlicher Rotoren 4 über konstante Anschlußdurchmesser an dem Verschluß 9 und an dem Bodenelement 20 befestigen zu können.

Wesentlich ist jedoch in jedem Falle, daß der Rotor 4 mit der Motorwelle 3 in den Spalttopf 2 bzw. 19, 20 eingebracht und darin durch den Verschluß 9 eingeschlossen wird, bevor diese vormontierte Baueinheit 1 in das Motorgehäuse 10 eingebracht wird.

## Patentansprüche

1. Verfahren zur Montage eines Spalttopfmotors (11), wobei ein Spalttopf (2) in das Motorgehäuse (10) eingebracht wird, und ein auf einer Motorwelle (3) befestigter Rotor (4) in den Spalttopf (2) eingebracht und darin drehbar gelagert wird, und wobei der Spalttopf (2) durch einen Verschluss (9) verschlossen wird, welcher eine Öffnung (12) aufweist, durch die die Motorwelle (3) hindurchgeführt wird,
**dadurch gekennzeichnet,**
**dass** zunächst der auf der Motorwelle (3) befestigte Rotor (4) in den Spalttopf (2) eingebracht und darin drehbar gelagert wird,
und **dass** danach der Spalttopf (2) durch den Verschluß (9) verschlossen wird, und dass erst danach der Spalttopf (2) mit dem darin eingeschlossenen Rotor (4) in das Motorgehäuse (10) eingebracht wird, wobei der Verschluss (9) kraftschlüssig an dem Spalttopf (2) befestigt, insbesondere darin eingepresst wird
und **dass** nach der kraftschlüssigen Befestigung des Verschlusses (9) am Spalttopf (2) zunächst geprüft wird, ob die Motorwelle (3) frei drehbar ist,
und **dass** der Verschluss (9) wieder von dem Spalttopf (2) entfernt und in einer um einen Winkel verdrehten Position erneut aufgebracht wird, falls die Motorwelle (3) nicht frei drehbar ist,
und **dass** der Verschluss (9) gegebenenfalls stoffschlüssig am Spalttopf (2) befestigt wird, wenn die Motorwelle (3) frei drehbar ist.

2. Verfahren nach Anspruch 1 **dadurch gekennzeichnet, dass** der Verschluss (9) stoffschlüssig an dem Spalttopf (2) befestigt wird.

3. Verfahren nach Anspruch 2, **dadurch gekennzeichnet, dass** der Verschluss (9) linienförmig oder an mehreren Stellen punktförmig mit dem Spalttopf (2) verschweißt, insbesondere laserverschweißt wird.

4. Verfahren nach einem der vorherigen Ansprüche, **dadurch gekennzeichnet, dass** in der Öffnung (12) des Verschlusses (9) vor dem Verschließen des Spalttopfes (2) ein Lager (5) angeordnet wird, in welchem das freie Ende der Motorwelle (3) gelagert wird.

5. Verfahren nach einem der vorherigen Ansprüche, **dadurch gekennzeichnet, dass** der Verschluss (9) durch einen Lagerschild gebildet wird, der mit einem Kragen (15) radial nach außen über den Spalttopf (2) übersteht, wobei das Motorgehäuse (10) stirnseitig durch den Kragen (15) verschlossen wird.

6. Verfahren nach einem der Ansprüche 1 bis 4, **dadurch gekennzeichnet, dass** der Spalttopf (2) einen radial nach außen vorstehenden Kragen aufweist, durch den das Motorgehäuse (10) beim Einbringen des Spalttopfes (2) stirnseitig verschlossen wird.

7. Verfahren nach einem der vorherigen Ansprüche, **dadurch gekennzeichnet, dass** der Spalttopf (2) durch ein Spaltrohr (19) gebildet wird, welches an seinem dem freien Ende der Motorwelle (3) abgewandten Ende durch ein Bodenelement (20) verschlossen wird.

8. Verfahren nach Anspruch 7, **dadurch gekennzeichnet, dass** das Bodenelement (20) mit einem ringförmigen Bereich formschlüssig in das Spaltrohr (19) eingesetzt wird und darin kraftschlüssig und/oder stoffschlüssig befestigt wird.

9. Verfahren nach Anspruch 7 oder 8, **dadurch gekennzeichnet, dass** das Bodenelement (20) linienförmig oder an mehreren Stellen punktförmig mit dem Spaltrohr (19) verschweißt, insbesondere laserverschweißt wird.

## Claims

1. Assembling method of an air gap sleeve motor (11), in which an air gap sleeve (2) is inserted into the motor housing (10), and a rotor (4) fixed to a motor shaft (3) is inserted into the air gap sleeve (2) and is rotatable in it, and in which the air gap sleeve (2) is closed by a fastener (9) which has an opening (12) through which the motor shaft (3) is fed, **characterised in that,** firstly the rotor (4) fixed to the motor shaft (3) is inserted into the air gap sleeve (2) in which it is rotatable, and afterwards the air gap sleeve (2) is closed by the fastener (9) and is only then inserted into the motor housing (10) with the rotor (4) enclosed in it, in which the fastener (9) is force fitted to the air gap sleeve (2) and in particular is compressed into it
and after force fit fixing of the fastener (9) to the air gap sleeve (2), there are initially checks whether the motor shaft (3) is freely rotatable and that the fastener (9) is again removed from the air gap sleeve (2) and returned to a turned at an angle position if the motor shaft (3) is not freely rotatable,
and that the fastener (9) is firmly bonded were necessary to the air gap sleeve (2) if the motor shaft (3) is freely rotatable.

2. Method according to claim 1, **characterised in that** the fastener (9) is firmly bonded to the air gap sleeve (2).

3. Method according to claim 2, **characterised in that** the fastener (9) is linear welded or spot welded at several points to the air gap sleeve (2), particularly laser welded.

4. Method according to any of the foregoing claims, **characterised in that** a bearing (5), in which the free end of the motor shaft (3) is supported, is arranged in the opening (12) of the fastener (9) before the closure of the air gap sleeve (2).

5. Method according to any of the foregoing claims, **characterised in that** the fastener (9) is formed by an end shield, which projects with a collar (15) radially outwards over the air gap sleeve (2), and the face of the motor housing (10) is closed by the collar (15).

6. Method according to any of claims 1 to 4, **characterised in that** the air gap sleeve (2) has a collar projecting radially outwards, by which the face of the motor housing (10) is closed during insertion of the air gap sleeve (2).

7. Method according to any of the foregoing claims, **characterised in that** the air gap sleeve (2) is formed by a can (19), which is closed at its end opposite to the free end of the motor shaft (3) by a base element (20).

8. Method according to claim 7, **characterised in that** the base element (20) is positively inserted into the can (19) by an annular area and is force fitted and/or firmly bonded in it.

9. Method according to claim 7 or 8, **characterised in that** the base element (20) is linear welded or spot welded at several points to the can (19), particularly laser welded.

## Revendications

1. Procédé de montage d'un moteur à chemise d'entrefer (11), dans lequel une chemise d'entrefer (2) est introduite dans le carter-moteur (10), et un rotor (4), fixé sur un arbre (3) du moteur, est introduit dans la chemise d'entrefer (2) et y est monté tournant, et dans lequel la chemise d'entrefer (2) est fermée par une fermeture (9), qui présente une ouverture (12) au travers de laquelle est guidé l'arbre (3) du moteur, **caractérisé en ce que** le rotor (4), fixé sur l'arbre (3) du moteur, est d'abord introduit dans la chemise d'entrefer (2) et y est monté tournant, que la chemise d'entrefer (2) est ensuite fermée par la fermeture (9), et que, seulement après, la chemise d'entrefer (2) avec le rotor (4) inclus dans cette dernière est introduite dans le carter-moteur (10), la fermeture (9) étant alors fixée par force d'adhérence sur la chemise d'entrefer (2), y étant en particulier pressée, et que, après la fixation par force d'adhérence de la fermeture (9) sur la chemise d'entrefer (2), il est d'abord vérifié si l'arbre (3) du moteur est librement tournant, et que la fermeture (9) est de nouveau retirée de la chemise d'entrefer (2) et appliquée de nouveau dans une position tournée d'un angle, si l'arbre (3) du moteur n'est pas librement tournant, et que la fermeture (9) est éventuellement fixée par alliance de matière sur la chemise d'entrefer (2), lorsque l'arbre (3) du moteur est librement tournant.

2. Procédé suivant la revendication 1, **caractérisé en ce que** la fermeture (9) est fixée par alliance de matière sur la chemise d'entrefer (2).

3. Procédé suivant la revendication 2, **caractérisé en ce que** la fermeture (9) est soudée avec la chemise d'entrefer (2) linéairement ou par points en plusieurs endroits, en particulier soudée au laser.

4. Procédé suivant l'une des revendications précédentes, **caractérisé en ce qu'**un palier (5) est disposé dans l'ouverture (12) de la fermeture (9) avant l'obturation de la chemise d'entrefer (2), palier dans lequel est logée l'extrémité libre de l'arbre (3) du moteur.

5. Procédé suivant l'une des revendications précédentes, **caractérisé en ce que** la fermeture (9) est formée par un flasque, qui dépasse radialement vers l'extérieur, par un collet (15), de la chemise d'entrefer (2), le carter-moteur (10) étant alors fermé du côté frontal par le collet (15).

6. Procédé suivant l'une des revendications 1 à 4, **caractérisé en ce que** la chemise d'entrefer (2) présente un collet dépassant radialement vers l'extérieur, par lequel le carter-moteur (10) est fermé du côté frontal lors de l'introduction de la chemise d'entrefer (2).

7. Procédé suivant l'une des revendications précédentes, **caractérisé en ce que** la chemise d'entrefer (2) est formée par un tube d'entrefer (19), qui est fermé par un élément de fond (20) à son extrémité opposée à l'extrémité libre de l'arbre (3) du moteur.

8. Procédé suivant la revendication 7, **caractérisé en ce que** l'élément de fond (20) est mis en place par coopération de forme, par une zone annulaire, dans le tube d'entrefer (19) et y est fixé par force d'adhérence et/ou par alliance de matière.

9. Procédé suivant l'une des revendications 7 et 8, **caractérisé en ce que** l'élément de fond (20) est soudé avec le tube d'entrefer (19) linéairement ou par points en plusieurs endroits, en particulier soudé au laser.
